# EUROPEAN PATENT APPLICATION

(11) **EP 4 793 785 A1**
(43) Date of publication of application: **19.08.2026**
(21) Application number: 24881042.6
(22) Date of filing: 12.06.2024
(51) Int. Cl.: G06F 15/173

(54) **DATA PROCESSING METHOD, NETWORK CARD, COMPUTER DEVICE, AND COMPUTER CLUSTER**

(30) Priority: 27.10.2023 CN 202311411791
(71) Applicant: HUAWEI TECHNOLOGIES CO., LTD., Shenzhen 518129 (CN)
(72) Inventor: FANG, Tuo, Shenzhen, Guangdong 518129 (CN); CHENG, Yang, Shenzhen, Guangdong 518129 (CN); DU, Yunfei, Shenzhen, Guangdong 518129 (CN)
(74) Representative: Isarpatent
(86) International application number: PCT/CN2024/098722
(87) International publication number: WO 2025/086664

(57) **Abstract**

A data processing method, a network interface controller, a compute device, and a computer cluster are disclosed, and relate to the field of communication technologies. The method includes: grouping a plurality of compute nodes of a computer cluster into a first group and a second group, where each of the first group and the second group includes at least two compute nodes; and establishing a all-to-all connectivity between processes on intra-group compute nodes of the first group and a correspondence between processes that belong to a same application and that are on inter-group compute nodes of the first group and the second group. A correspondence between a first process and a second process may be determined based on the foregoing correspondence, and then data is processed based on the correspondence. In comparison with a all-to-all connectivity between processes run on different compute nodes, in this application, a quantity of connections can be reduced to expand a scale of the computer cluster. Based on the correspondence, the first process and the second process may directly communicate with each other. In comparison with dynamically creating and destroying a connection relationship between processes, computing overheads and a communication delay can be reduced.

## Description

This application claims priority to Chinese Patent Application No. 202311411791.2, filed with the China National Intellectual Property Administration on October 27, 2023 and entitled "DATA PROCESSING METHOD, NETWORK INTERFACE CONTROLLER, COMPUTE DEVICE, AND COMPUTER CLUSTER", which is incorporated herein by reference in its entirety.

### TECHNICAL FIELD

This application relates to the field of communication technologies, and in particular, to a data processing method, a network interface controller, a compute device, and a computer cluster.

### BACKGROUND

Currently, a compute node of a computer cluster may be equipped with a network interface controller, and a connection may be established between compute nodes through network interface controllers based on a remote direct memory access (RDMA) technology for communication. Usually, the connection may be established between the compute nodes in a full-connection manner based on a reliable connection (reliable connection, RC) protocol. However, because storage space of the network interface controller is limited, using the full-connection manner causes a limited quantity of compute nodes disposed in the computer cluster, resulting in a small scale of the computer cluster. For another example, a compute node is connected to and communicates with another compute node based on an unreliable datagram (UD) protocol. Although in this manner, a scale of the computer cluster is expanded by reducing a quantity of connections, because the UD protocol cannot ensure reliability of data transmission (for example, out-of-order packet reordering and retransmission of lost packets), additional computing overheads need to be occupied to implement these reliability functions. For another example, a quantity of connections is reduced in a dynamic connection manner, to expand a scale of the computer cluster. However, in this manner, connections need to be frequently created and destroyed, and consequently, problems such as high computing overheads and a high communication delay are caused.

### SUMMARY

This application provides a data processing method, a network interface controller, a compute device, and a computer cluster, so that computing overheads and a communication delay can be reduced on a premise of expanding a scale of the computer cluster.

According to a first aspect, this application provides a data processing method applied to a computer cluster. The computer cluster includes a plurality of compute nodes, the plurality of compute nodes communicate with each other based on RDMA, the plurality of compute nodes include a first compute node, and a processor of the first compute node performs the method. The method includes: grouping the plurality of compute nodes into a first group and a second group, where each of the first group and the second group includes at least two compute nodes; and establishing a all-to-all connectivity between processes on intra-group compute nodes of the first group and a correspondence between processes that belong to a same application and that are on inter-group compute nodes of the first group and the second group. A correspondence between a first process and a second process may be determined based on the foregoing correspondence, and then a network interface controller processes data based on the correspondence.

The plurality of compute nodes are grouped, and there is a correspondence between processes run on intra-group compute nodes and a correspondence between processes that belong to a same application and that are run on inter-group compute nodes. In comparison with a all-to-all connectivity between processes run on different compute nodes (a plurality of processes run on a source compute node are in a one-to-one correspondence with a plurality of processes run on a destination compute node), in this application, a quantity of connections can be reduced to expand a scale of the computer cluster. Based on the correspondence between the first process and the second process, the first process and the second process may directly communicate with each other. In comparison with dynamically creating and destroying a connection relationship between processes, computing overheads and a communication delay can be reduced.

In a possible implementation, grouping the plurality of compute nodes of the computer cluster into the first group and the second group includes: grouping the plurality of compute nodes into the first group and the second group based on a communication delay between any two compute nodes in the plurality of compute nodes.

The communication delay may be a time for transmitting data from the source compute node to the destination compute node. Communication delays between different compute nodes are different. The plurality of compute nodes are grouped based on a result of the communication delay, and at least two compute nodes with a low communication delay may be grouped into a same group, to reduce a communication delay between compute nodes.

In another possible implementation, after establishing the all-to-all connectivity between the processes on the intra-group compute nodes of the first group and the correspondence between the processes that belong to the same application and that are on the inter-group compute nodes of the first group and the second group, the method further includes: a network interface controller of the first compute node obtains data for communication between a first process and a second process; and the network interface controller of the first compute node processes the data based on the correspondence between the first process and the second process.

After the processor completes compute node grouping and process connection establishment, because the plurality of compute nodes communicate with each other based on RDMA, the network interface controller of the first compute node may process the obtained data based on the correspondence between the first process and the second process. In this data processing process, the processor does not need to participate. This reduces computing overheads of the processor.

In another possible implementation, the first compute node runs a third process, a second compute node runs the second process, a third compute node runs the first process, and the third compute node and the second compute node belong to different groups; obtaining the data for the communication between the first process and the second process includes: receiving data sent by the third compute node; and processing the data based on the correspondence between the first process and the second process includes: if identifiers of the first process and the second process that belong to different applications and that are on the inter-group compute nodes are different, storing the data in the third process, and sending the data to the second compute node.

When the third compute node (the source compute node) and the second compute node (the destination compute node) belong to different groups, the identifiers of the first process and the second process that belong to the different applications and that are on the inter-group compute nodes are different, the first process and the second process cannot communicate with each other, the third process run on the first compute node needs to be used to implement communication, and the first process and the second process are connected by using the third process as an intermediary. In this case, the first compute node is used as a forwarding compute node, first stores, in the third process, the received data sent by the third compute node, and then forwards the data to the second compute node. In this way, the communication between the first process and the second process is implemented through the third process. In comparison with dynamically creating and destroying a connection relationship between processes, computing overheads and a communication delay can be reduced.

In another possible implementation, the first compute node runs the first process, a second compute node runs the second process, and the second compute node and the first compute node belong to a same group; obtaining the data for the communication between the first process and the second process includes: generating the data; and processing the data based on the correspondence between the first process and the second process includes: storing the data in the first process, and sending the data to the second compute node.

In another possible implementation, the first compute node runs the first process, a second compute node runs the second process, and the second compute node and the first compute node belong to a same group; obtaining the data for the communication between the first process and the second process includes: receiving data sent by the second compute node; and processing the data based on the correspondence between the first process and the second process includes: storing the data in the first process, and processing the data obtained from the first process.

When the second compute node and the first compute node belong to the same group, based on a case in which there is a all-to-all connectivity between processes on intra-group compute nodes (a plurality of processes run on the intra-group first compute node are in a one-to-one correspondence with a plurality of processes run on the intra-group second compute node), regardless of whether the first process and the second process belong to a same application, that is, regardless of whether an identifier of the first process is the same as an identifier of the second process, the first process and the second process are correspondingly connected, and the first process and the second process may directly communicate with each other. In this case, when the first compute node is used as the source compute node, the first compute node generates to-be-sent data, stores the data in the first process, and sends the data to the second compute node. When the first compute node is used as the destination compute node, the first compute node stores, in the first process, the received data sent by the second compute node, and directly processes the data in the first process, to implement the communication between the first process and the second process. In comparison with dynamically creating and destroying a connection relationship between processes, computing overheads and a communication delay can be reduced.

In another possible implementation, the first compute node runs the first process, a second compute node runs the second process, and the second compute node and the first compute node belong to different groups; and processing the data based on the correspondence between the first process and the second process includes: if identifiers of the first process and the second process that belong to a same application and that are on the inter-group compute nodes are the same, storing the data in the first process, and processing the data obtained from the first process.

When the second compute node (the source compute node) and the first compute node (the destination compute node) belong to the different groups, the identifiers of the first process and the second process that belong to the same application and that are on the inter-group compute nodes are the same, the first process and the second process are correspondingly connected, and the first process and the second process may directly communicate with each other. In this case, the first compute node stores, in the first process, received data sent by the second compute node, and directly processes the data in the first process, to implement the communication between the first process and the second process. In comparison with dynamically creating and destroying a connection relationship between processes, computing overheads and a communication delay can be reduced.

According to a second aspect, this application provides a network interface controller. The network interface controller includes a processor, a storage, and a communication interface. The storage is configured to store a correspondence between a first process and a second process and data for communication between the first process and the second process, the communication interface is configured to send and receive the data for the communication between the first process and the second process, and the processor is configured to perform operation steps of obtaining the data for the communication between the first process and the second process and processing the data based on the correspondence between the first process and the second process in the first aspect or the possible implementations of the first aspect.

According to a third aspect, this application provides a compute device. The compute device includes a processor, a storage, and a network interface controller. The storage is configured to store a group of computer instructions. When the processor is used as an execution device in the first aspect or the possible implementations of the first aspect to execute the group of computer instructions, the processor performs operation steps of grouping compute nodes and establishing a correspondence between processes in the first aspect or the possible implementations of the first aspect.

According to a fourth aspect, this application provides a computer cluster. The computer cluster includes a plurality of compute nodes, the plurality of compute nodes are grouped into a first group and a second group, each of the first group and the second group includes at least two compute nodes, there is a all-to-all connectivity between processes run on intra-group compute nodes of the first group, there is a correspondence between processes that belong to a same application and that are on inter-group compute nodes of the first group and the second group, the plurality of compute nodes include a first compute node, a processor of the first compute node performs operation steps of grouping the compute nodes and establishing a correspondence between processes in the first aspect or the possible implementations of the first aspect, and a network interface controller of the first compute node performs operation steps of obtaining data for communication between a first process and a second process and processing the data based on a correspondence between the first process and the second process in the first aspect or the possible implementations of the first aspect.

According to a fifth aspect, this application provides a computer-readable storage medium. The computer-readable storage medium includes computer software instructions. When the computer software instructions are run in a compute device, the compute device is enabled to perform operation steps of a data processing method according to any one of the first aspect or the possible implementations of the first aspect.

According to a sixth aspect, this application provides a computer program product. When the computer program product is run on a computer, a compute device is enabled to perform operation steps of a data processing method according to any one of the first aspect or the possible implementations of the first aspect.

For technical effects brought by any design manner in the second aspect to the sixth aspect, refer to technical effects brought by the first aspect or different design manners in the first aspect. Details are not described herein again.

In this application, based on implementations provided in the foregoing aspects, the implementations may be further combined to provide more implementations.

### BRIEF DESCRIPTION OF DRAWINGS

FIG. 1 is a diagram of a structure of a computer system according to this application;
FIG. 2 is a schematic flowchart of a process connection method according to this application;
FIG. 3A to FIG. 3D are diagrams of a process of grouping a plurality of compute nodes based on a minimum RTT result according to this application;
FIG. 4A to FIG. 4D are diagrams of a process of grouping a plurality of compute nodes based on a shortest route according to this application;
FIG. 5 is a diagram of a correspondence between processes according to this application;
FIG. 6 is a diagram of a data forwarding process according to this application; and
FIG. 7 is a diagram of a structure of a compute device according to this application.

### DESCRIPTION OF EMBODIMENTS

For clear and brief description of the following embodiments, terms in this application are first briefly described.

A computer cluster (computer cluster) is a group of compute devices loosely or tightly connected for operating, which are usually configured to execute a large-scale job. Computational efficiency of a cluster compute device is usually higher than computational efficiency of a single compute device that has a similar speed or similar availability. The plurality of compute devices are used for parallel computing, and a plurality of compute resources are used for problem resolving, so that a computing speed and a processing speed of a cluster system can be increased, and overall performance of the cluster system can be improved. The compute devices are connected to each other through a network, and each compute device runs an operating system instance of the compute device.

Remote direct memory access (remote direct memory access, RDMA) means that a connection may be established between a source compute node and a destination compute node through network interface controllers for communication, and the source compute node may directly access a memory of the destination compute node based on a network interface controller. Packet encapsulation, packet transmission, packet parsing, and the like are all completed by the network interface controller without participation of a processor, so that load of the processor can be reduced. This network communication technology may be applied to the field of high-performance computing.

A compute node of a computer cluster may be equipped with a network interface controller, and a connection may be established between compute nodes through network interface controllers based on an RDMA technology for network communication. A larger quantity of compute nodes of the computer cluster indicates a larger quantity of connections between the compute nodes. However, because storage space of the network interface controller is limited, a large quantity of connections in a full-connection manner causes a limited quantity of compute nodes disposed in the computer cluster, resulting in a small scale of the computer cluster. Although the quantity of connections can be reduced based on a UD protocol or a dynamic connection manner, to expand a scale of the computer cluster, in these manners, problems such as high computing overheads and a high communication delay are caused.

To resolve the problems such as the high computing overheads and the high communication delay on a premise of ensuring the scale of the computer cluster by reducing the quantity of connections, this application provides a data processing method, applied to a computer cluster. The computer cluster includes a plurality of compute nodes, the plurality of compute nodes communicate with each other based on RDMA, the plurality of compute nodes include a first compute node, and a processor of the first compute node performs the method. The method includes: grouping the plurality of compute nodes into a first group and a second group, where each of the first group and the second group includes at least two compute nodes; and establishing a all-to-all connectivity between processes on intra-group compute nodes of the first group and a correspondence between processes that belong to a same application and that are on inter-group compute nodes of the first group and the second group. A correspondence between a first process and a second process may be determined based on the foregoing correspondence, and then a network interface controller processes data based on the correspondence.

The plurality of compute nodes are grouped, and there is a correspondence between processes run on intra-group compute nodes and a correspondence between processes that belong to a same application and that are run on inter-group compute nodes. In comparison with a all-to-all connectivity between processes run on different compute nodes, in this application, a quantity of connections can be reduced to expand a scale of the computer cluster. Based on the correspondence between the first process and the second process, the first process and the second process may directly communicate with each other. In comparison with dynamically creating and destroying a connection relationship between processes, computing overheads and a communication delay can be reduced.

The following describes in detail the data processing method provided in this application with reference to the accompanying drawings.

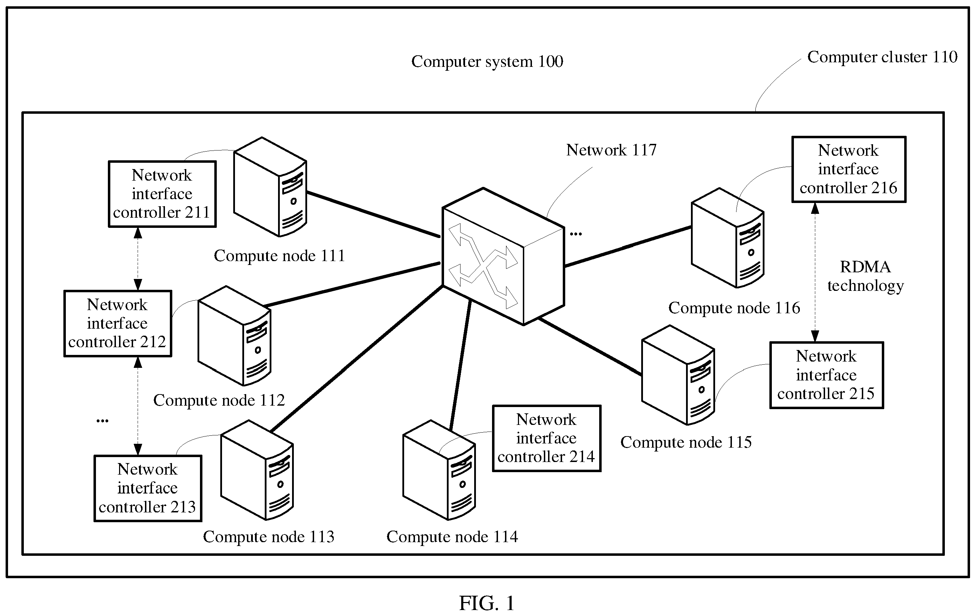

FIG. 1 is a diagram of a computer system according to this application. As shown in FIG. 1, the computer system 100 includes a computer cluster 110.

The computer cluster 110 includes a plurality of compute nodes, for example, as shown in FIG. 1, a compute node 111, a compute node 112, a compute node 113, a compute node 114, a compute node 115, and a compute node 116. These compute nodes are configured to provide compute resources. For one compute node, the compute node may include a plurality of processors or a plurality of processor cores, and each processor or processor core may be one compute resource. Therefore, one physical compute node may provide a plurality of compute resources. The compute node 111, the compute node 112, the compute node 113, the compute node 114, the compute node 115, and the compute node 116 are interconnected through a network 117. The network 117 may be any telecommunication or computer network, including, for example, an enterprise intranet, a wide area network (wide area network, WAN), a local area network (local area network, LAN), or an Internet.

In some embodiments, each compute node of the computer cluster 110 may be equipped with a network interface controller (network interface controller, NIC). As shown in FIG. 1, the compute node 116 is equipped with a network interface controller 216, the compute node 115 is equipped with a network interface controller 215, the compute node 114 is equipped with a network interface controller 214, the compute node 113 is equipped with a network interface controller 213, the compute node 112 is equipped with a network interface controller 212, and the compute node 111 is equipped with a network interface controller 211. Communication between compute nodes is implemented through network interface controllers. For example, a connection may be established between the compute node 116 and the compute node 115 through the network interface controller 216 and the network interface controller 215 based on an RDMA technology for communication, and communication between the network interface controller 216 and the compute node 116 may be implemented in a parallel transmission manner through an input/output (input/output, I/O) bus on a mainboard.

For example, the network interface controller 216 equipped on the compute node 116 may include a processor, a storage, and a communication interface. In this application, the processor of the network interface controller is configured to: obtain data for communication between a first process and a second process; and process the data based on a correspondence between the first process and the second process. For a specific implementation process, refer to descriptions in subsequent method steps. The storage may be configured to: store the correspondence between the first process and the second process and the data that is for the communication between the first process and the second process and that is stored in a send queue, a receive queue, and a forwarding queue of each process, and send and receive the data for the communication between the first process and the second process through the communication interface.

Any compute node of the computer cluster 110 may control execution of node grouping and process connection establishment, coordinate batch execution of tasks, and control an execution sequence of the tasks, to avoid an inaccurate node grouping result or an inaccurate process connection result caused by network congestion. For example, the compute node 116 groups the compute node 116, the compute node 115, and the compute node 114 into a first group and groups the compute node 113, the compute node 112, and the compute node 111 into a second group based on a communication delay result, and establishes a all-to-all connectivity between processes run on intra-group compute nodes and a correspondence between processes that belong to a same application and that are on inter-group compute nodes. For a specific implementation process, refer to descriptions in subsequent method steps.

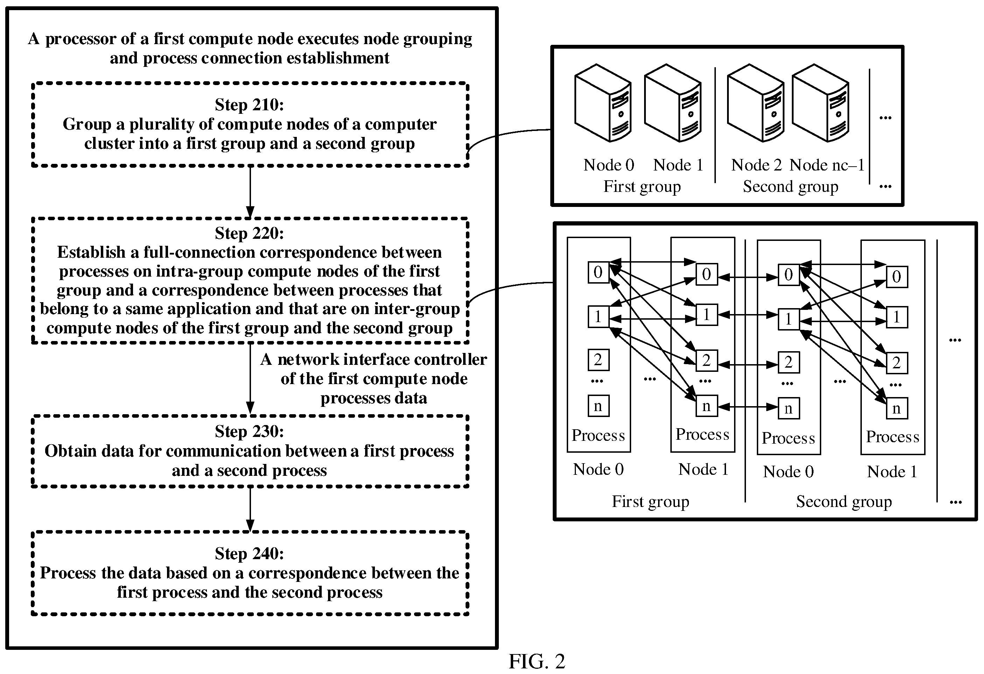

The following describes in detail the data processing method provided in this application with reference to FIG. 2 to FIG. 7.

In some embodiments, before processing data for communication between a first process and a second process based on a correspondence between the first process and the second process, a first compute node needs to first establish the correspondence between the first process and the second process. The correspondence may be stored in a storage of a network interface controller of the first compute node, so that the first compute node queries the correspondence between the first process and the second process from the storage when processing the data. FIG. 2 is a schematic flowchart of a data processing method according to this application. As shown in FIG. 2, the data processing method may include the following steps.

Step 210: Group a plurality of compute nodes of a computer cluster into a first group and a second group.

The computer cluster includes the plurality of compute nodes, the plurality of compute nodes communicate with each other based on RDMA, and a first compute node may be any compute node in the plurality of compute nodes. A processor of the first compute node may group the plurality of compute nodes to obtain at least two groups, and each group includes at least two different compute nodes. For ease of description, the first group and the second group are used as an example of the at least two groups herein.

In some embodiments, the processor of the first compute node may group the plurality of compute nodes into the first group and the second group based on a communication delay between any two compute nodes in the plurality of compute nodes. A communication delay exists in communication between different compute nodes, and communication delays between any two compute nodes are different. The processor of the first compute node may group the plurality of compute nodes based on a result of the communication delay between any two compute nodes, and group at least two compute nodes with a low communication delay into a same group.

In a possible implementation, the first compute node may obtain a round-trip time (round-trip time, RTT) result between any two compute nodes. An RTT may indicate a total round-trip time consumed from a time when a transmit-end compute node in the two compute nodes sends data to a time when the transmit-end compute node receives a data receiving acknowledgment returned by a receive-end compute node. The first compute node may group the plurality of compute nodes based on the RTT result between any two compute node. For example, at least two compute nodes with a lowest RTT result are grouped into a same group.

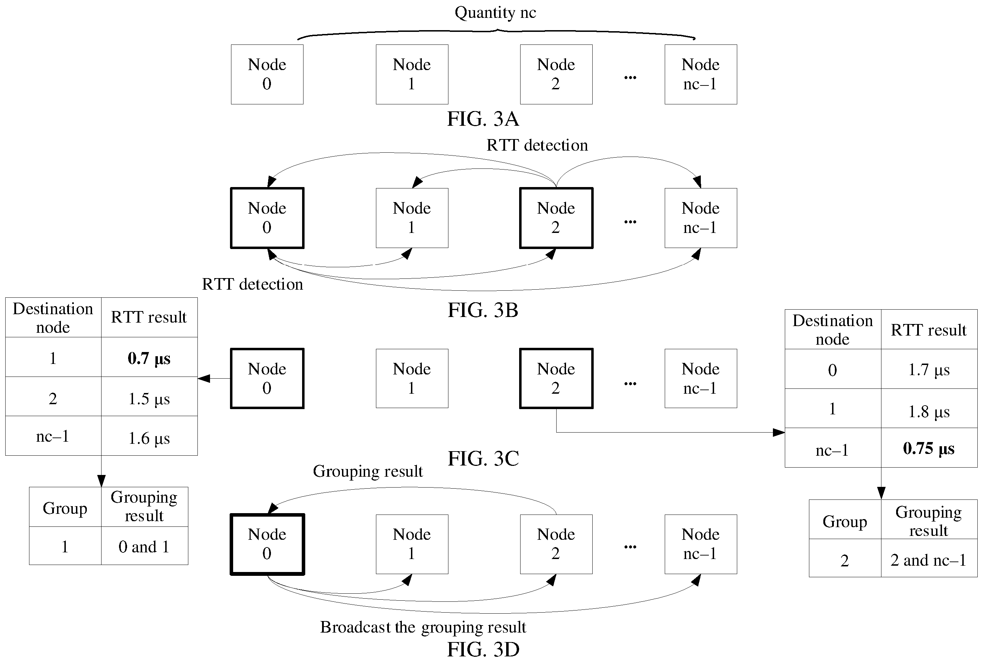

FIG. 3A to FIG. 3D are diagrams of a process of grouping the plurality of compute nodes based on a minimum RTT result according to this application. As shown in FIG. 3A, nc indicates a total quantity of compute nodes, a value range of nc may be 100 to 200, nc compute nodes are numbered based on 0, 1, 2, ..., and nc-1, and the compute nodes may be connected to and communicate with each other based on a UD protocol. The first compute node may be a node 0 in the compute nodes, and a controller may be run in the node 0 to coordinate execution of RTT detection tasks in batches and control an execution sequence of RTT detection tasks, to avoid an inaccurate RTT result caused by network congestion.

As shown in FIG. 3B, N compute nodes (for example, the node 0 and a node 2) are randomly selected from the nc compute nodes, and each compute node sends an RTT detection task request to all remaining compute nodes, to obtain an RTT result between the compute node and any one of all the remaining compute nodes. The first compute node may obtain an RTT result between any two compute nodes.

As shown in FIG. 3C, two compute nodes with a lowest RTT result in RTT results between any two compute nodes are grouped into a same group (for example, if an RTT result between the node 0 and a destination node 1 is the lowest, the node 0 and the node 1 are grouped into a same group; or if an RTT result between a node 2 and a destination node nc-1 is the lowest, the node 2 and the node nc-1 are grouped into a same group). When a grouping conflict occurs, compute nodes with smaller numbers may be grouped into a same group (for example, when the RTT result between the node 0 and the destination node 1 and an RTT result between the node 0 and the destination node 2 are the same, the node 0 and the destination node 1 are grouped into a same group).

As shown in FIG. 3D, after grouping is completed based on the minimum RTT result, the first compute node may obtain a grouping result of grouped compute nodes (for example, the node 2 sends, to the node 0, a grouping result indicating that the node 2 and the node nc-1 are in a same group), and broadcast the grouping result to all remaining compute nodes. A compute node that does not complete grouping repeats the foregoing process of grouping based on a minimum RTT result until all the compute nodes complete grouping.

In another possible implementation, the first compute node may group the plurality of compute nodes based on a communication route between any two compute nodes. For example, the first compute node may obtain a traceroute (traceroute) result between any two compute nodes. A traceroute (traceroute) may indicate a route that is between the two compute nodes and that is connected through a switch in a network topology of the computer cluster. Usually, a hop count indicates a quantity of switches that are passed through. A smaller hop count indicates a shorter route and a lower communication delay between the two compute nodes. The first compute node may group the plurality of compute nodes based on a route result between any two compute nodes. For example, at least two compute nodes with a shortest route are grouped into a same group.

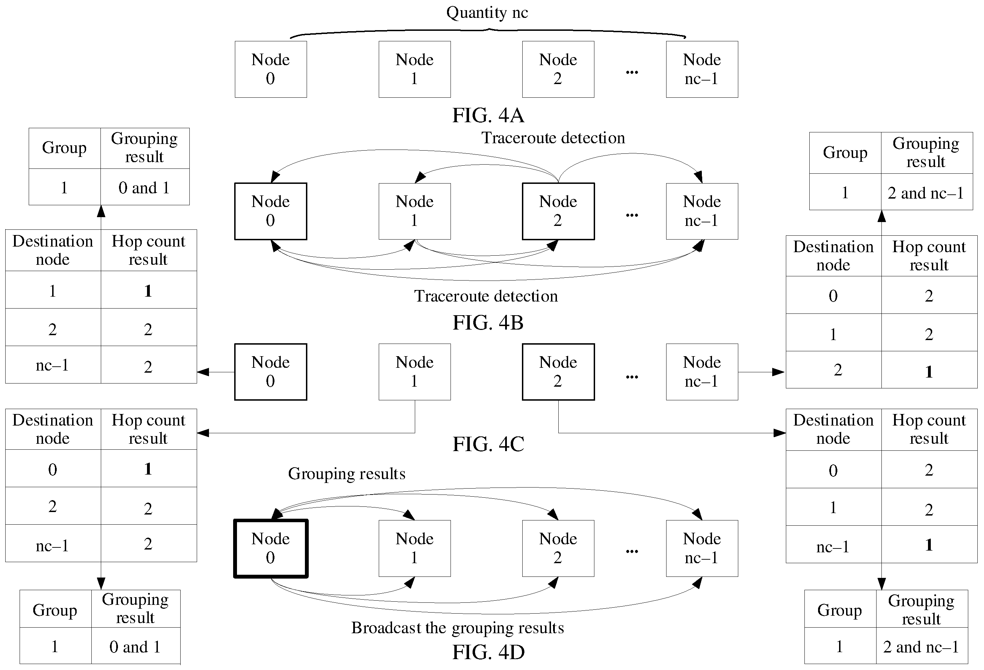

FIG. 4A to FIG. 4D are diagrams of a process of grouping a plurality of compute nodes based on a shortest route according to this application. As shown in FIG. 4A, nc indicates a total quantity of compute nodes, a value range of nc may be 100 to 200, nc compute nodes are numbered based on 0, 1, 2, ..., and nc-1, and the compute nodes may be connected to and communicate with each other based on a UD protocol.

As shown in FIG. 4B, each compute node sends a traceroute (traceroute) detection task request to all remaining compute nodes, to obtain a hop count result between the compute node and any one of all the remaining compute nodes. The first compute node may obtain a hop count result between any two compute nodes.

A smaller hop count result indicates a shorter route between two compute nodes. As shown in FIG. 4C, two compute nodes with a minimum hop count result in hop count results between any two compute nodes are grouped into a same group (for example, if a hop count result between a node 0 and a destination node 1 is the minimum, the node 0 and the node 1 are grouped into a same group; or if a hop count result between a node 2 and a destination node nc-1 is the minimum, the node 2 and the node nc-1 are grouped into a same group). When a grouping conflict occurs, compute nodes with smaller numbers may be grouped into a same group (for example, when the hop count result between the node 0 and the destination node 1 and a hop count result between the node 0 and the destination node 2 are the same, the node 0 and the destination node 1 are grouped into a same group).

As shown in FIG. 4D, after grouping is completed based on the minimum hop count result, the first compute node may obtain a grouping result of any two compute nodes (for example, the node 2 sends, to the node 0, a grouping result indicating that the node 2 and the node nc-1 are in a same group), and broadcast the grouping result to all remaining compute nodes.

Step 220: Establish a all-to-all connectivity between processes on intra-group compute nodes of the first group and a correspondence between processes that belong to a same application and that are on inter-group compute nodes of the first group and the second group.

After the plurality of compute nodes are grouped into the first group and the second group based on the communication delay result, based on a case in which a plurality of processes may be run on each compute node, the first compute node needs to establish a correspondence between processes run on intra-group compute nodes of each group and the correspondence between the processes that belong to the same application and that are run on the inter-group compute nodes of the first group and the second group.

In some embodiments, the first compute node may establish a all-to-all connectivity between the processes run on the intra-group compute nodes of each group. The intra-group compute nodes include the first compute node and a second compute node. The all-to-all connectivity may be that a plurality of processes run on the intra-group first compute node are in a one-to-one correspondence with a plurality of processes run on the intra-group second compute node. For example, a plurality of processes run on the first compute node and the second compute node are numbered. A process number may be used as a process identifier, the process identifier may uniquely indicate a process, and process identifiers of the plurality of processes run on the first compute node and the second compute node may be 0 to n. The all-to-all connectivity between the plurality of processes run on the first compute node and the plurality of processes run on the second compute node may be that a process 0 run on the first compute node is in a one-to-one correspondence with processes 0 to n run on the second compute node, a process 1 run on the first compute node is in a one-to-one correspondence with the processes 0 to n run on the second compute node, ..., and by analogy, a process n run on the first compute node is in a one-to-one correspondence with the processes 0 to n run on the second compute node.

The first compute node may further establish the correspondence between the processes that belong to the same application and that are on the inter-group compute nodes of the first group and the second group. Identifiers of a first process and a second process that belong to a same application and that are on the inter-group compute nodes are the same. For example, the inter-group compute nodes include the first compute node and a second compute node, that is, the first compute node and the second compute node belong to different groups, and process identifiers of a plurality of processes run on the first compute node and the second compute node may be 0 to n. Identifiers of processes that belong to a same application and that are on the inter-group first compute node and the inter-group second compute node are the same. A correspondence between processes with same identifiers may be that a process 0 run on the first compute node corresponds to a process 0 run on the second compute node, a process 1 run on the first compute node corresponds to a process 1 run on the second compute node, ..., and by analogy, a process n run on the first compute node corresponds to a process n run on the second compute node.

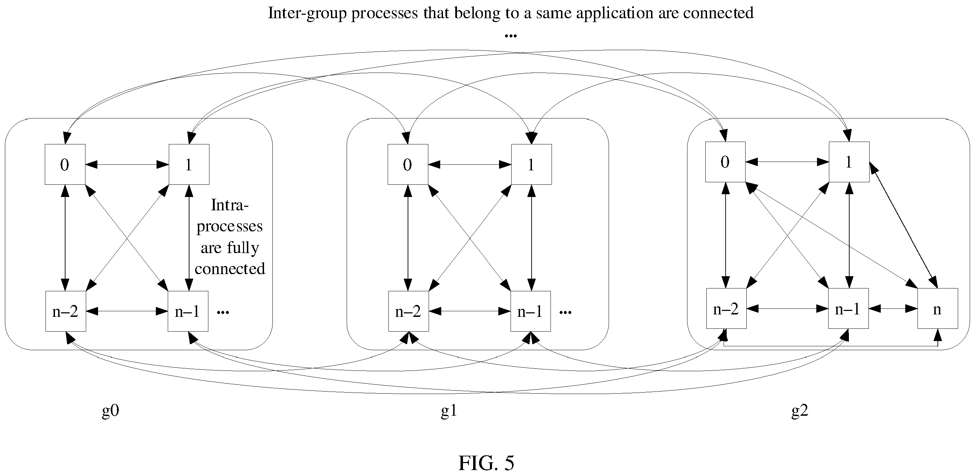

A correspondence between the foregoing processes is understood below with reference to the accompanying drawings. FIG. 5 is a diagram of a correspondence between processes according to this application. As shown in FIG. 5, a group 0 (indicated by g0 in the figure), a group 1 (indicated by g1 in the figure), and a group 2 (indicated by g2 in the figure) are different groups, and processes run on intra-group compute nodes of each group are in full connection. For example, any process run on one compute node in the group 0 is connected to each of processes 0 to n-1 run on another compute node in the group 0. Processes that belong to a same application and that are on inter-group compute nodes of at least two groups are connected. For example, a process 0 run on one compute node in the group 0 is connected to a process 0 run on one compute node in the group 1, a process 0 run on one compute node in the group 0 is connected to a process 0 run on one compute node in the group 2, and a process 0 run on one compute node in the group 1 is connected to a process 0 run on one compute node in the group 2.

It should be noted that, if a process n run on one compute node in the group 2 is to be connected to a process n-1 run on one compute node in the group 1, the process n in the group 2 needs to be first connected to a process n-1 in the group, and then the process n-1 in the group 2 is connected to a process n-1 in the group 1; or when processes 0 to n are run on a compute node in the group 1, the process n in the group 2 is first connected to the process n in the group 1, and then the process n in the group 1 is connected to the process n-1 in the group.

Optionally, after the plurality of compute nodes are grouped and a correspondence between processes is established, a network interface controller of the first compute node may process data for communication between the first process and the second process based on a correspondence between the first process and the second process. A specific implementation method is described in step 230 and step 240.

Step 230: Obtain the data for the communication between the first process and the second process.

The network interface controller of the first compute node may obtain a packet for data transmission between a source compute node and a destination compute node. The packet includes the data for the communication between the first process and the second process, and further includes the identifier of the first process and the identifier of the second process, a source address of a network interface controller of the source compute node, and a destination address (for example, an IP address) of a network interface controller of the destination compute node. The first process may be a process run on the source compute node, the second process may be a process run on the destination compute node, the source address of the network interface controller may indicate a transmit-end network interface controller address, and a destination address of the network interface controller may indicate a receive-end network interface controller address.

In some embodiments, before processing the data based on the correspondence between the first process and the second process, the first compute node may determine the correspondence between the first process and the second process based on addresses of network interface controllers of compute nodes to which the first process and the second process belong, and the identifiers of the first process and the second process.

Based on a case in which the compute nodes have been grouped in the method described in step 210, the first compute node queries, based on the addresses of the network interface controllers of the compute nodes to which the first process and the second process belong, a grouping result that is of the compute nodes and that is stored in a storage of the network interface controller of the first compute node, to first determine that the source compute node to which the first process belongs and the destination compute node to which the second process belongs belong to a same group or different groups. Based on a case in which the correspondence between the processes has been established in the method described in step 220, the first compute node queries, based on the identifiers of the first process and the second process, the correspondence that is between the processes and that is stored in the storage of the network interface controller of the first compute node, to determine the correspondence between the first process and the second process that belong to a same group or different groups.

Step 240: Process the data based on the correspondence between the first process and the second process.

Because the source compute node to which the first process belongs and the destination compute node to which the second process belongs may belong to a same group or different groups, the first process and the second process may belong to a same application or different applications, that is, the identifier of the first process and the identifier of the second process may be the same or may be different. There is a all-to-all connectivity between processes run on intra-group compute nodes, and there is a correspondence between processes that belong to a same application and that are on inter-group compute nodes. Therefore, the first compute node processes the data in different manners based on different correspondences between the first process and the second process, which may specifically include three manners in the following example.

Manner 1: The first compute node and the second compute node belong to a same group, and the data is processed based on a all-to-all connectivity between the first process and the second process.

The first compute node may run the first process, and the second compute node may run the second process. When the first compute node and the second compute node belong to the same group, because there is a all-to-all connectivity between processes run on intra-group compute nodes, regardless of whether the first process and the second process belong to a same application, that is, regardless of whether the identifier of the first process is the same as the identifier of the second process, the first process and the second process may communicate with each other based on the all-to-all connectivity.

In some embodiments, the first compute node may be used as the source compute node, and the second compute node may be used as the destination compute node. The first compute node may generate the data for the communication between the first process and the second process. Processing the data based on the all-to-all connectivity between the first process and the second process may be storing the data in a send queue of the first process, and sending the data to the second compute node, to store the data in a receive queue of the second process.

In some other embodiments, the second compute node may be used as the source compute node, and the first compute node may be used as the destination compute node. The first compute node may receive the data that is for the communication between the first process and the second process and that is sent by the second compute node. Processing the data based on the all-to-all connectivity between the first process and the second process may be storing the data in a receive queue of the first process, processing the data obtained from the receive queue, and storing the data in a completion queue of the first process after the processing is completed.

Manner 2: The first compute node and the second compute node belong to different groups, the first process and the second process belong to a same application, and the data is processed based on a correspondence between processes with same identifiers.

The first compute node may run the first process, and the second compute node may run the second process. When the first compute node and the second compute node belong to the different groups, because there is a correspondence between processes that belong to a same application and that are on inter-group compute nodes, and the identifiers of the first process and the second process that belong to the same application are the same, when the identifier of the first process is the same as the identifier of the second process, the first process and the second process may communicate with each other based on a correspondence between processes with same identifiers.

In some embodiments, the first compute node may be used as the source compute node, and the second compute node may be used as the destination compute node. The first compute node may generate the data for the communication between the first process and the second process. When the identifier of the first process is the same as the identifier of the second process, processing the data based on the correspondence between the processes with the same identifiers may be storing the data in a send queue of the first process, and sending the data to the second compute node, to store the data in a receive queue of the second process.

In some other embodiments, the second compute node may be used as the source compute node, and the first compute node may be used as the destination compute node. The first compute node may receive the data that is for the communication between the first process and the second process and that is sent by the second compute node. When the identifier of the first process is the same as the identifier of the second process, processing the data based on the correspondence between the processes with the same identifiers may be storing the data in a receive queue of the first process, processing the data obtained from the receive queue, and storing the data in a completion queue of the first process after the processing is completed.

Manner 3: A third compute node and the second compute node belong to different groups, the first process and the second process belong to different applications, and the data is processed based on a forwarding correspondence between processes with different identifiers.

The third compute node may run the first process, and the second compute node may run the second process. When the third compute node and the second compute node belong to the different groups, there is a correspondence between processes that belong to a same application and that are on inter-group compute nodes. However, there is no correspondence between processes that belong to different applications and that are on the inter-group compute nodes. Therefore, when the first process and the second process belong to the different applications, and the identifiers of the first process and the second process that belong to the different applications are different, the first process cannot directly communicate with the second process, the first compute node needs to be used as a forwarding compute node, and a third process run on the first compute node is used as a forwarding process to implement communication between the first process and the second process.

In some embodiments, the third compute node may be used as the source compute node, and the second compute node may be used as the destination compute node. The first compute node may receive the data that is for the communication between the first process and the second process and that is sent by the third compute node. When the identifier of the first process is different from the identifier of the second process, processing the data based on the forwarding correspondence between the processes with the different identifiers may be storing the data in a forwarding queue of the third process, and sending the data to the second compute node, to store the data in a receive queue of the second process.

In some other embodiments, the second compute node may be used as the source compute node, and the third compute node may be used as the destination compute node. The first compute node may receive the data that is for the communication between the first process and the second process and that is sent by the second compute node. When the identifier of the first process is different from the identifier of the second process, processing the data based on the forwarding correspondence between the processes with the different identifiers may be storing the data in a forwarding queue of the third process, and sending the data to the third compute node, to store the data in a receive queue of the first process.

In the embodiment described in Manner 3, the third compute node and the second compute node belong to the different groups. As the forwarding compute node, the first compute node may belong to a same group as the third compute node, or may belong to a same group as the second compute node.

In a possible implementation, when the first compute node and the third compute node belong to a same group, that the third compute node is used as the source compute node, the second compute node is used as the destination compute node, the first compute node runs the third process, the second compute node runs the second process, and the third compute node runs the first process is used as an example. The first compute node may receive the data that is for the communication between the first process and the second process and that is sent by the third compute node. Because there is a all-to-all connectivity between processes run on intra-group compute nodes, the data is processed based on a all-to-all connectivity between the first process and the third process. The first compute node may store the data in a forwarding queue of the third process. Because there is a correspondence between processes that belong to a same application and that are on inter-group compute nodes, the second process and the third process belong to a same application, and identifiers of the two processes are the same, the data is processed based on a correspondence between processes with same identifiers. The first compute node may send the data to the second compute node, and store the data in a receive queue of the second process. The second compute node processes the data obtained from the receive queue, and stores the data in a completion queue of the second process after the processing is completed.

In a possible implementation, when the first compute node and the second compute node belong to a same group, that the third compute node is used as the source compute node, the second compute node is used as the destination compute node, the first compute node runs the third process, the second compute node runs the second process, and the third compute node runs the first process is used as an example. The first compute node may receive the data that is for the communication between the first process and the second process and that is sent by the third compute node. Because there is a correspondence between processes that belong to a same application and that are on inter-group compute nodes, the first process and the third process belong to a same application, and identifiers of the first process and the third process are the same, the data is processed based on a correspondence between processes with same identifiers. The first compute node may store the data in a forwarding queue of the third process. Because there is a all-to-all connectivity between processes run on intra-group compute nodes, the data is processed based on a all-to-all connectivity between the second process and the third process. The first compute node may send the data to the second compute node, and store the data in a receive queue of the second process. The second compute node processes the data obtained from the receive queue, and stores the data in a completion queue of the second process after the processing is completed.

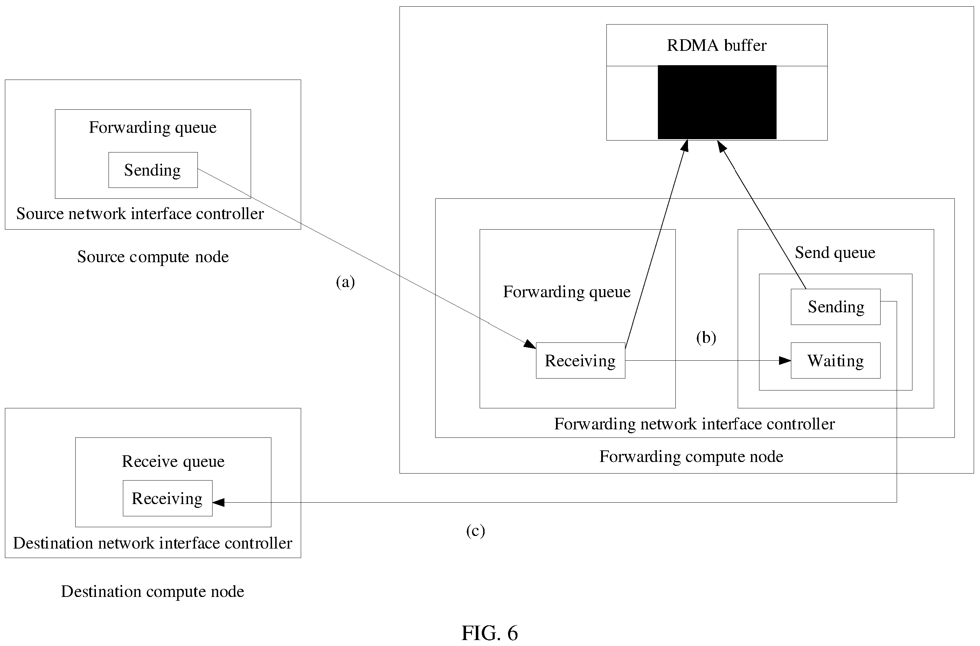

The following describes, with reference to the accompanying drawings, the foregoing process of implementing communication between processes through a forwarding queue. FIG. 6 is a diagram of a data forwarding process according to this application. As shown in FIG. 6, a forwarding channel needs to be established between a source compute node and a forwarding compute node. The forwarding compute node may create an RDMA memory registration (memory registration, MR) specially used for forwarding. The RDMA MR is used to store to-be-forwarded data. An RDMA buffer (buffer) address may be a registered MR address. A process run on the forwarding compute node may store a receiving work queue event (work queue event, WQE) into a forwarding queue (forwarding queue, FQ) in advance, or may store a waiting WQE and a sending WQE into a send queue (send queue, SQ) in advance.

As shown in (a) in FIG. 6, a source network interface controller of the source compute node sends a sending WQE in a process forwarding queue to the receiving WQE in the process forwarding queue of a forwarding network interface controller of the forwarding compute node. As shown in (b) in FIG. 6, the forwarding network interface controller of the forwarding compute node processes and receives the WQE, stores the to-be-forwarded data in the RDMA buffer, and triggers, after generating a completion queue event (completion queue event, CQE), waiting in the process send queue, to activate a subsequent sending WQE. As shown in (c) in FIG. 6, the forwarding network interface controller of the forwarding compute node obtains the to-be-forwarded data in the RDMA buffer, and sends the sending WQE in the process send queue to a process receive queue of a destination network interface controller of a destination node.

The foregoing mainly describes the solutions provided in embodiments of this application from the perspective of the methods. It may be understood that, to implement the foregoing functions, a compute device includes a corresponding hardware structure and/or software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

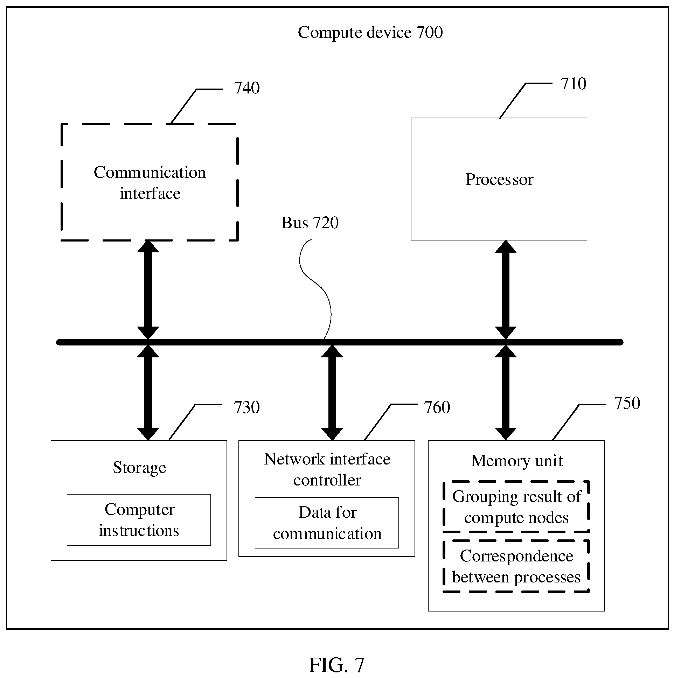

The foregoing describes in detail the data processing method provided in embodiments of this application with reference to FIG. 2 to FIG. 6. The following describes, with reference to FIG. 7, a compute device that implements the data processing method provided in embodiments of this application.

FIG. 7 is a diagram of a structure of a compute device according to this embodiment. As shown in FIG. 7, the compute device 700 includes a processor 710, a bus 720, a storage 730, a memory unit 750 (which may also be referred to as a main memory (main memory) unit), a network interface controller 760, and a communication interface 740. The processor 710, the storage 730, the memory unit 750, the network interface controller 760, and the communication interface 740 are connected through the bus 720.

It should be understood that, in this embodiment, the processor 710 may be a CPU, or the processor 710 may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like.

The communication interface 740 is configured to implement communication between the compute device 700 and an external device or component. In this embodiment, the communication interface 740 is configured to perform data exchange with another compute device.

The bus 720 may include a path, configured to transmit information between the foregoing components (for example, the processor 710, the memory unit 750, and the storage 730). In addition to a data bus, the bus 720 may further include a power bus, a control bus, a status signal bus, and the like. However, for clear description, various types of buses in the figure are marked as the bus 720. The bus 720 may be a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL) bus, a cache coherent interconnect for accelerators (cache coherent interconnect for accelerators, CCIX) bus, or the like.

In an example, the compute device 700 may include a plurality of processors. The processor may be a multi-core (multi-CPU) processor. The processor herein may be one or more devices, circuits, and/or compute units configured to process data (for example, computer program instructions). The processor 710 may implement a function of grouping compute nodes and establishing a correspondence between processes. For example, the processor 710 is configured to: group a plurality of compute nodes of a computer cluster into a first group and a second group, where each of the first group and the second group includes at least two compute nodes; and establish a all-to-all connectivity between processes on intra-group compute nodes of the first group and a correspondence between processes that belong to a same application and that are on inter-group compute nodes of the first group and the second group.

It should be noted that, in FIG. 7, only an example in which the compute device 700 includes one processor 710 and one storage 730 is used. Herein, the processor 710 and the storage 730 each indicate a type of component or device. In a specific embodiment, a quantity of components or devices of each type may be determined based on a service requirement.

The network interface controller 760 may include a processor and a storage. The storage of the network interface controller 760 may be a persistent memory (Persistent Memory, PM), a non-volatile random access memory (Non-Volatile Random Access Memory, NVRAM), a phase change memory (phase change memory, PCM), or the like. The storage is configured to store data for communication between a first process and a second process. The network interface controller 760 may implement a data processing function. For example, the processor of the network interface controller 760 is configured to obtain the data for the communication between the first process and the second process. The processor of the network interface controller 760 may access a correspondence that is between processes and that is stored in the memory unit 750, and process the data for the communication between the first process and the second process based on a correspondence between the first process and the second process.

The memory unit 750 may correspond to storing a grouping result of compute nodes and a correspondence between processes in the foregoing method embodiments. The memory unit 750 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example description rather than a limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 730 is configured to store computer instructions, a grouping result of compute nodes, a correspondence between processes, and the like, and may be a solid-state drive or a mechanical hard disk drive.

It should be understood that the compute device 700 according to this embodiment may correspond to a corresponding execution body according to FIG. 2, to implement a corresponding procedure in FIG. 2. For brevity, details are not described herein again.

The method steps in embodiments may be implemented in a hardware manner, or may be implemented by executing software instructions by a processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist in a network device or a terminal device as discrete components.

This application further provides a chip system. The chip system includes a processor, configured to implement a function of grouping compute nodes and establishing a correspondence between processes in the foregoing method. In a possible design, the chip system further includes a storage, configured to store program instructions and/or data. The chip system may include a chip, or may include a chip and another discrete component.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, applied to a computer cluster, wherein the computer cluster comprises a plurality of compute nodes, the plurality of compute nodes communicate with each other based on remote direct memory access RDMA, the plurality of compute nodes comprise a first compute node, a processor of the first compute node performs the method, and the method comprises:
grouping the plurality of compute nodes of the computer cluster into a first group and a second group, wherein the first group comprises at least two compute nodes, and the second group comprises at least two compute nodes; and
establishing a all-to-all connectivity between processes on intra-group compute nodes of the first group and a correspondence between processes that belong to a same application and that are on inter-group compute nodes of the first group and the second group.

2. The method according to claim 1, wherein grouping the plurality of compute nodes of the computer cluster into the first group and the second group comprises:
grouping the plurality of compute nodes into the first group and the second group based on a communication delay between any two compute nodes in the plurality of compute nodes.

3. The method according to claim 1 or 2, wherein after establishing the all-to-all connectivity between the processes on the intra-group compute nodes of the first group and the correspondence between the processes that belong to the same application and that are on the inter-group compute nodes of the first group and the second group, the method further comprises:
obtaining, by a network interface controller of the first compute node, data for communication between a first process and a second process; and
processing, by the network interface controller of the first compute node, the data based on a correspondence between the first process and the second process.

4. The method according to claim 3, wherein the first compute node runs a third process, a second compute node runs the second process, a third compute node runs the first process, and the third compute node and the second compute node belong to different groups;
obtaining the data for the communication between the first process and the second process comprises:
receiving data sent by the third compute node; and
processing the data based on the correspondence between the first process and the second process comprises:
if identifiers of the first process and the second process that belong to different applications and that are on the inter-group compute nodes are different, storing the data in the third process, and sending the data to the second compute node.

5. The method according to claim 3, wherein the first compute node runs the first process, a second compute node runs the second process, and the second compute node and the first compute node belong to a same group;
obtaining the data for the communication between the first process and the second process comprises:
generating the data; and
processing the data based on the correspondence between the first process and the second process comprises:
storing the data in the first process, and sending the data to the second compute node.

6. The method according to claim 3, wherein the first compute node runs the first process, a second compute node runs the second process, and the second compute node and the first compute node belong to a same group;
obtaining the data for the communication between the first process and the second process comprises:
receiving data sent by the second compute node; and
processing the data based on the correspondence between the first process and the second process comprises:
storing the data in the first process, and processing the data obtained from the first process.

7. The method according to claim 3, wherein the first compute node runs the first process, a second compute node runs the second process, and the second compute node and the first compute node belong to different groups; and
processing the data based on the correspondence between the first process and the second process comprises:
if identifiers of the first process and the second process that belong to a same application and that are on the inter-group compute nodes are the same, storing the data in the first process, and processing the data obtained from the first process.

8. A network interface controller, comprising a processor, a storage, and a communication interface, wherein the storage is configured to store a correspondence between a first process and a second process and data for communication between the first process and the second process, the communication interface is configured to send and receive the data for the communication between the first process and the second process, and the processor is configured to perform operation steps of a method of obtaining the data for the communication between the first process and the second process and processing the data based on the correspondence between the first process and the second process.

9. A compute device, comprising a processor, a storage, and the network interface controller according to claim 8, wherein the processor is configured to perform operation steps of a method of: grouping a plurality of compute nodes of a computer cluster into a first group and a second group, wherein the first group comprises at least two compute nodes, and the second group comprises at least two compute nodes; and establishing a all-to-all connectivity between processes on intra-group compute nodes of the first group and a correspondence between processes that belong to a same application and that are on inter-group compute nodes of the first group and the second group, and the network interface controller is configured to perform operation steps of a method of obtaining data for communication between a first process and a second process and processing the data based on a correspondence between the first process and the second process.

10. A computer cluster, comprising a plurality of compute nodes, wherein the plurality of compute nodes are grouped into a first group and a second group, the first group comprises at least two compute nodes, the second group comprises at least two compute nodes, there is a all-to-all connectivity between processes on intra-group compute nodes of the first group, there is a correspondence between processes that belong to a same application and that are on inter-group compute nodes of the first group and the second group, the plurality of compute nodes comprise a first compute node, a processor of the first compute node is configured to perform operation steps of the foregoing method of grouping the compute nodes and establishing a correspondence between processes, and a network interface controller of the first compute node is configured to perform operation steps of a method of obtaining data for communication between a first process and a second process and processing the data based on a correspondence between the first process and the second process.
